## Europäisches Patentamt

## European Patent Office

## Office européen des brevets

(19)

(11) Veröffentlichungsnummer: **0 114 918**
A2

# (12) EUROPÄISCHE PATENTANMELDUNG

(21) Anmeldenummer: 83104253.6

(22) Anmeldetag: 30.04.83

(51) Int. Cl.³: **H 02 G 3/04**

---

(30) Priorität: 30.12.82 DE 8236831 U

(43) Veröffentlichungstag der Anmeldung:
08.08.84 Patentblatt 84/32

(84) Benannte Vertragsstaaten:
AT BE CH DE FR GB IT LI NL SE

(71) Anmelder: Sprenger, Walter
Algersdorf 4
D-8565 Kirchensittenbach(DE)

(72) Erfinder: Sprenger, Walter
Algersdorf 4
D-8565 Kirchensittenbach(DE)

(74) Vertreter: Rau, Manfred, Dr. Dipl.-Ing. et al,
Patentanwälte Rau & Schneck Postfach 91 04 80 Lange
Zeile 30
D-8500 Nürnberg 91(DE)

---

(54) Kabelschutzeinrichtung.

(57) Eine Kabelschutzeinrichtung umfaßt einen verschließbaren Längshohlkörper aus Kunststoff, Gummi od. dgl., insbesondere zur nachträglichen Verlegung von Kabeln an Wänden, Böden order Möbeln.

Um eine Kabelschutzeinrichtung zu schaffen, welche sich als Endlosprofil billig herstellen läßt, welche im zerlegten Zustand optisch zurücktritt, welche sich bequem verlegen läßt und welche es letztlich gestattet, die einzelnen Kabel darin mühelos unterzubringen, weist sie zwei in Längsrichtung miteinander verbundene Schenkel (1", 2") auf, die senkrecht zueinander angeordnet oder in eine zueinander senkrechte Lage bringbar sind, und ist mindestens eine den durch die Schenkel (1", 2") in ihrer zueinander senkrechten Lage aufgespannten Hohlraum abschließende Abdeckung (3", 4") elastisch zurückklappbar mit einem Schenkel (1", 2") verbunden.

FIG.3

EP 0 114 918 A2

Hiervon ausgehend liegt der Erfindung die Aufgabe zugrunde, eine Kabelschutzeinrichtung zu schaffen, welche sich als Endlosprofil billig herstellen läßt, welche im verlegten Zustand optisch zurücktritt, welche sich bequem verlegen läßt und welche es letztlich gestattet, die einzelnen Kabel darin mühelos unterzubringen.

Diese Aufgabe wird erfindungsgemäß bei einer Kabelschutzeinrichtung der gattungsgemäßen Art dadurch gelöst, daß sie zwei in Längsrichtung miteinander verbundene Schenkel aufweist, die senkrecht zueinander angeordnet oder in eine zueinander senkrechte Lage bringbar sind und daß mindestens eine den durch die Schenkel in ihrer zueinander senkrechten Lage aufgespannten Raum abschließende Abdeckung elastisch zurückklappbar mit einem Schenkel verbunden ist. Die erfindungsgemäße Formgebung macht es möglich, die Kabelschutzeinrichtung längs beliebiger rechtwinkliger Kanten, sei es z.B. zwischen Wand und Fußboden oder aber auch am Übergang zwischen der Unterseite einer Schreibtischplatte und dem zugehörigen Korpus unauffällig zu verlegen. Die einstückige Ausgestaltung der Kabelschutzeinrichtung, die nur aus zwei Schenkeln und mindestens einer Abdeckung besteht, ermöglicht in besonders einfacher Weise eine Endlos-Herstellung. Dabei werden bevorzugt Gummi oder ausreichend weiche Kunststoffe, wie Weich-Polyvinylchlorid (Weich-PVC) oder ausreichend weiches Polyäthylen (PE) eingesetzt.

Wenn in vorteilhafter Ausgestaltung der Erfindung die Schenkel gelenkig miteinander verbunden sind, dann kann die Kabelschutzeinrichtung mit in einer Ebene liegenden Schenkeln hergestellt werden, die dann erst bei der Verlegung in eine zueinander senkrechte Lage ge-

bracht werden. Dies erleichtert erheblich die Herstellung, da die Abdeckung frei von dem anderen Schenkel ist, mit dem sie nicht fest verbunden ist. Weiterhin ermöglicht diese Formgebung bei der Herstellung ein Aufrollen der Kabelschutzeinrichtung, da sie in dieser Form nicht steif ist. Der Transport und die Lagerung zum Verkauf lassen sich dadurch leichter bewerkstelligen. Es können Standardgrößen von mehreren Metern verhältnismäßig eng aufgewickelt werden. Bei der Verlegung mit zueinander senkrechter Lage der Schenkel wird dann die Kabelschutzeinrichtung bereits erheblich steifer.

Wenn gemäß einer weiteren vorteilhaften Ausgestaltung der Erfindung die mit dem einen Schenkel verbundene Abdeckung in eine dem anderen Schenkel zugeordnete Einrast-Ausnehmung einrastbar ist, dann wird - nach dem Einlegen eines Kabels und dem anschließenden Einrasten der Abdeckung - ein dichter und steifer Verbund der beiden Schenkel und der Abdeckung erreicht, so daß das Kabel mechanisch sicher und feuchtigkeitssicher gelagert ist, obwohl die Kabelschutzeinrichtung an sich aus relativ weichem Material besteht.

Wenn hierbei die Sehne der Abdeckung in nicht eingerastetem Zustand länger ist als der Abstand zwischen der Verbindung der Abdeckung mit dem einen Schenkel und der Einrastausnehmung, dann wird die Abdeckung beim Einrasten noch verspannt, was zum einen zur Erhöhung der Dichtigkeit der Verbindung zwischen Abdeckung und Schenkel im Einrastbereich und zum anderen zu einer Erhöhung der Steifigkeit der Abdeckung führt, die ja am ehesten mechanischen Belastungen ausgesetzt ist.

Vorteilhafterweise ist weiterhin die Abdeckung gekrümmt, und zwar konvex oder konkav. Wenn die Abdekkung konkav gekrümmt ist, dann ist gemäß einer weiteren vorteilhaften Ausgestaltung der Erfindung die Einrast-Ausnehmung in einem von dem anderen Schenkel vorspringenden Steg ausgebildet.

Gemäß einer weiteren Ausgestaltung der Erfindung
ist die Abdeckung in ihrem Einrast-Bereich mit
einem widerhakenförmigen Vorsprung versehen, der in
eine dem Vorsprung im Querschnitt angepaßte, der Einrast-Ausnehmung zugeordnete Nut unter Verspannung der
Abdeckung gegen die Einrast-Ausnehmung einrastbar ist.
Durch diese Maßnahme wird erreicht, daß die durch Einrastung herstellbare Verbindung zwischen Abdeckung und
zugeordnetem Schenkel so fest wird, daß sie nicht versehentlich gelöst werden kann. Andererseits kann sie aber
in einfacher Weise gelöst werden, indem beispielsweise
mittels eines Schraubendrehers oder eines anderen geeigneten flachen Gegenstandes der Schenkel im Bereich
der Einrast-Ausnehmung heruntergedrückt wird, so daß
eine Entlastung der Verspannung eintritt.

Vorteilhafterweise wird weiterhin die Gestaltung so getroffen, daß im Bereich der Außenkante eines jeden
Schenkels je eine Abdeckung vorgesehen ist, wobei die
so gebildeten Abdeckungen sich wenigstens teilweise
überlappen. Hierdurch wird ein besonders guter mechanischer und flüssigkeits- und staubdichter Schutz der
in der Kabelschutzeinrichtung verlegten Kabel erzielt.

Außer durch die eigene Elastizität der Kabelschutzeinrichtung wird deren einfache Verlegung noch dadurch
gefördert, daß wenigstens eine Außenfläche der Schenkel mit einer selbstklebenden Beschichtung versehen ist, die mit einer Abziehfolie versehen ist. Letztere kann krepartig gerippt sein, wodurch Lagerung und Verkauf von der Rolle erleichtert wird. Nach Abziehen der Abziehfolie erfolgt die Verlegung durch einfaches Andrücken. Anstelle einer solchen selbstklebenden Beschichtung können zum Verlegen naturgemäß auch Winkelprofilstücke verwendet werden, die an der entsprechenden Stelle befestigt werden und in die dann die Kabelschutzeinrichtung eingedrückt wird.

Die erfindungsgemäße Kabelschutzeinrichtung eignet sich damit ebenso für die Verlegung von Fernsehantennenkabeln, Lautsprecherkabeln, Leitungen für Klingeln und Haustelefone, Gegensprechanlagen und dergleichen im Wohnraum wie für Telefonzuleitungen, Leitungen für Sprechanlagen, Datenübertragungsleitungen und dgl. im Büro.

Weitere Merkmale, Vorteile und Einzelheiten der Erfindung ergeben sich aus der folgenden Beschreibung von Ausführungsformen anhand der Zeichnung. Es zeigt

Fig. 1 eine stirnseitige perspektivische Ansicht einer ersten Ausführungsform,

Fig. 2 einen Querschnitt durch eine zweite Ausführungsform,

Fig. 3 eine stirnseitige perspektivische Ansicht einer dritten Ausführungsform in nicht verlegtem Zustand,

Fig. 4 eine Stirnansicht der Ausführungsform nach Fig. 3 in verlegtem Zustand und

Fig. 5 eine stirnseitige perspektivische Ansicht einer vierten Ausführungsform.

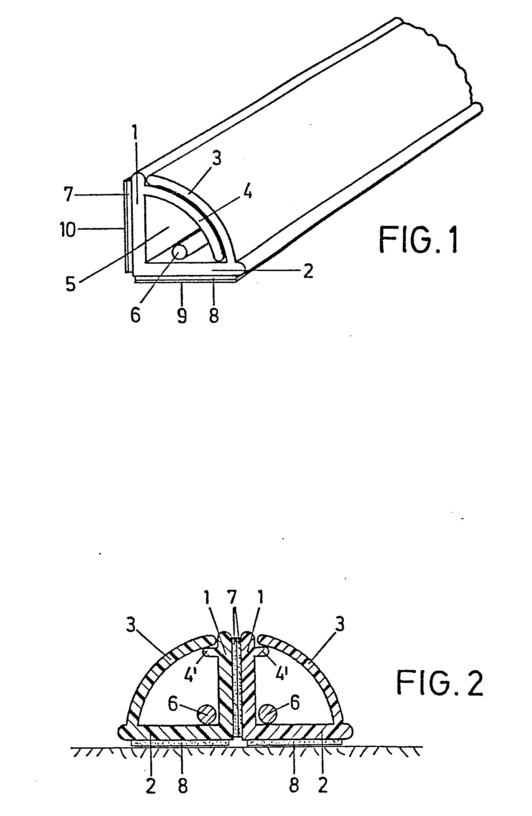

Die in Fig. 1 dargestellte Ausführungsform einer Kabelschutzeinrichtung weist zwei Schenkel 1 und 2 auf, welche einen rechten Winkel einschließen. An den Enden der Schenkel 1 bzw. 2 sind im Querschnitt etwa kreisringabschnittsförmige Abdeckungen 3 und 4 vorgesehen, wobei die (innere) Abdeckung 4 am Ende des Schenkels 1 etwas nach innen versetzt angeordnet ist, so daß die (äußere) Abdeckung 3 mit der freien Längskante des Schenkels 1 harmonisch abschließend darübergreifen kann. Zwischen den Schenkel 1, 2 und den Abdeckungen 3, 4 wird ein Hohlraum 5 eingeschlossen, in welchem schematisch angedeutet ein Kabel 6 verlegt ist. Durch das verwendete gummiartige also weichelastische Material weisen die Abdeckungen 3 bzw. 4 eine solche Eigenelastizität auf, daß sie sich elastisch zurückklappen lassen, um ein Kabel entweder zu verlegen oder herauszunehmen.

Die Befestigung der Kabelschutzeinrichtung erfolgt über Selbstklebeschichten 7 und 8, welche jeweils durch eine Abziehfolie 9, 1o abgedeckt sind, die sich zum Verlegen mühelos entfernen läßt. Es braucht dann lediglich nur noch der eine Schenkel 1 gegen den Fuß einer Wand und der andere Schenkel 2 gegen den Boden gedrückt zu werden.

Die in Fig. 2 dargestellte Ausführungsform unterscheidet sich von der in Fig. 1 dargestellten nur dadurch, daß die innere Abdeckung 4' erheblich verkürzt ausgebildet ist und somit praktisch nur noch einen Dichtungsanschlag für die eigentliche Abdeckung 3 darstellt.

In Fig. 2 ist eine Art der Verlegung veranschaulicht, wie sie sich insbesondere für die freie Verlegung auf Fußböden eignet, da durch das Aneinanderfügen zweier erfindungsgemäßer Kabelschutzeinrichtungen eine insgesamt abgerundete Oberseite geschaffen wird, welche keine Stolperkanten oder Angriffspunkte für Beschädigungen bietet. Die selbstklebenden Beschichtungen 7 der vertikalen Schenkel 1 dienen dabei zur Verbindung der beiden Kabelschutzeinrichtungen untereinander, während die selbstklebenden Beschichtungen 8 der horizontalen Schenkel 2 die Befestigung am Boden bewerkstelligen.

Besonders einfach kann die Verlegung von Kabeln 6 in der Kabelschutzeinrichtung dadurch erfolgen, daß das zu verlegende Kabel 6 mit einer Art Häkelnadel oder dergleichen erfaßt und unter elastischem Zurückklappen der Abdeckung 3 und gegebenenfalls 4 an einer Stelle in die Kabelschutzeinrichtung eingebracht wird. Es braucht dann lediglich das entsprechende Hilfsinstrument mit der Spitze im Inneren verbleibend an der Kabelschutzeinrichtung entlanggeführt werden, wobei das Kabel 6 dann mühelos in diese hineingleitet.

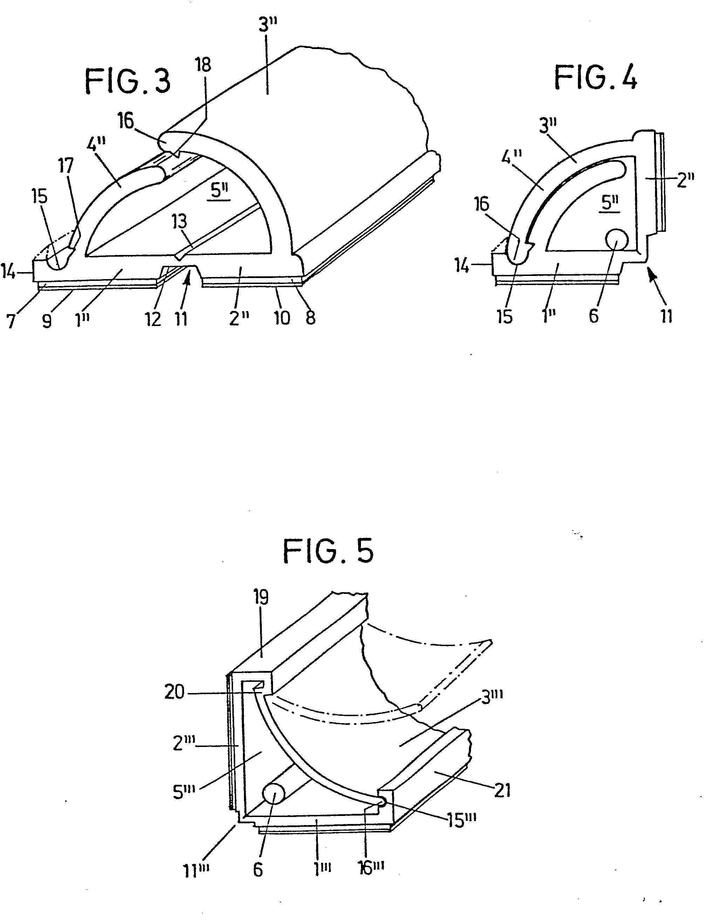

Wie aus Fig. 3 ersichtlich ist, kann eine Kabelschutzeinrichtung auch in der Weise hergestellt werden, daß die beiden Schenkel 1" und 2" in einer gemeinsamen Ebene liegen und mittels eines elastischen Gelenks 11 miteinander verbunden sind, das ein Umklappen der beiden Schenkel 1", 2" in eine zueinander senkrechte Lage gestattet, wie sie in Fig. 4 dargestellt ist. Ein solches elastisches Gelenk wird dadurch hergestellt, daß die Dicke der Schenkel 1", 2" in diesem Bereich reduziert ist, wozu eine äußere Längsnut 12 und eine innere, dem Hohlraum 5" zugewandte Einkerbung 13 dienen. Zwischen der freien Längskante 14 des Schenkels 1" und der inneren Abdeckung 4" ist im Schenkel 1" eine sich durchgehend in Längsrichtung erstreckende Einrast-Ausnehmung 15 ausgebildet, die etwa halbkreisförmigen Querschnitt aufweist. Sie ist in ihrer Formgebung der einen Einrast-Bereich 16 bildenden Längskante der äußeren Abdeckung 3" angepaßt. Unmittelbar oberhalb der Einrast-Ausnehmung 15 ist am Übergang zwischen dem Schenkel 1" in die innere Abdeckung 4" eine Nut 17 angeordnet, die im Querschnitt einem sich ebenfalls in Längsrichtung erstreckenden widerhakenförmigen Vorsprung 18 angepaßt ist, der im Anschluß an den Einrast-Bereich an der Innenseite der äußeren Abdeckung 3" ausgebildet ist. Dieser Vorsprung 18 ist so angeordnet, daß nach seinem Eindrücken in die Nut 17 der Einrast-Bereich 16 der äußeren Abdeckung 3" in die Einrast-Ausnehmung 15 gepreßt wird, beide Teile sich in diesem Bereich also elastisch verformen und damit verspannen.

Wie anschaulich aus einem Vergleich der Fig. 3 und 4 hervorgeht,ist die äußere Abdeckung 3" in unverspanntem Zustand flacher gewölbt als in verspanntem Zustand. Die Länge ihrer Sehne zwischen der Verbindungsstelle mit dem Schenkel 2" und ihrem Einrast-Bereich 16 ist also in unverspanntem Zustand größer als in verspanntem Zustand.

Auch bei dieser Ausführungsform sind die Schenkel 1" und 2" mit jeweils einer selbstklebenden Beschichtung 7 bzw.8 versehen, auf denen eine Abziehfolie 9 bzw. lo angebracht ist. Das Anbringen einer solchen selbstklebenden Beschichtung ist hierbei besonders einfach möglich, da sie bei der in Fig. 3 dargestellten Lage der Schenkel 1" und 2" zueinander erfolgen kann. Es kann in diesem Fall eine breite selbstklebende Beschichtung mit Abziehfolie aufgebracht und dann im Bereich der äußeren Längsnut 12
ein entsprechender Streifen herausgeschnitten werden.

Auch die Ausführung nach den Fig. 3 und 4 ist einstückig
ausgebildet. Auch bei dieser Ausführungsform sind die
Abdeckungen 3" und 4" konvex, also nach außen gewölbt.

Bei der Ausführungsform nach Fig. 5 sind ebenfalls zwei
mittels eines elastischen Gelenkes 11''' verbunde Schenkel 2''' und 1''' vorgesehen. Eine Abdeckung 3''' ist über
einen vom Schenkel 2''' hochstehenden Steg 19 mit ersterem
verbunden. Zwischen dem Steg 19 und der Abdeckung 3'''
ist noch ein elastisches Gelenk 2o ausgebildet.

Die Abdeckung 3 ''' ist konkav ausgebildet, also - bei
zueinander senkrechter Lage der Schenkel 1''', 2''' zu
diesen hin durchgebogen.

Vom freien Rand des anderen Schenkels 1''' steht ebenfalls
ein Steg 21 hoch, an dessen dem Hohlraum 5''' zugewandter
Seite eine Einrast-Ausnehmung 15''' ausgebildet ist,
die sich ebenfalls in Längsrichtung der Kabelschutzeinrichtung erstreckt. Diese Einrast-Ausnehmung ist dem
entsprechenden Einrast-Bereich 16''' der Abdeckung 3'''
im Querschnitt angepaßt. Auch hier wird wieder die Abdeckung 3 ''' beim Einrasten in die Einrast-Ausnehmung 15'''
elastisch zum Hohlraum 5 ''' hin verspannt. Die strichpunktierte Darstellung der Abdeckung 3''' zeigt diese
in einer zurückgeklappten Lage, in der ein Einlegen bzw.
Entnehmen eines Kabels 6 möglich ist. Diese Stellung
zum Schenkel 2''' entspricht etwa der Lage, in der die
Kabelschutzeinrichtung gespritzt bzw. extrudiert wird,
wobei dann allerdings der andere Schenkel 1''' sich in einer zum Schenkel 2 ''' fluchtenden Lage befindet.

Bei den Ausführungsformen nach den Fig. 3 bis 5 kann die Verlegung von Kabeln 6 ähnlich erfolgen, wie bei der Ausführungsform nach den Fig. 1 und 2. Das Einrasten der Abdeckung 3" bzw. 3 ''' in die Einrast-Ausnehmung 15 bzw. 15''' kann von Hand erfolgen. Zum Lösen dieser Rastverbindung wird ein Schraubendreher und ein vergleichbares flaches Werkzeug verwendet, mittels dessen von außen her in die Einrast-Ausnehmung eingegriffen wird.

Die Kabelschutzeinrichtung eignet sich ebenso für die Verlegung von Fernsehantennenkabeln, Lautsprecherkabeln, Leitungen für Klingeln und Haustelefone, Gegensprechanlagen und dgl. im Wohnraum wie für Telefonzuleitungen, Leitungen für Sprechanlagen, Datenübertragungsleitungen und dgl. im Büro.

Um eine Anpassung an unterschiedliche Raumgestaltungen zu erreichen, kann die äußere Abdeckung 3, 3", 3''' eine Dekor-Oberfläche aufweisen, wobei sogar auch eine Relief-Gestaltung möglich ist. So kann z.B. vorgesehen sein, daß die Oberfläche holzartig gestaltet ist, wobei der entsprechende Relief-Charakter durch eine korrespondierende Farbgebung ergänzt wird.

- 11 -

Patentansprüche:

1. Kabelschutzeinrichtung umfassend einen verschließbaren Längshohlkörper aus Kunststoff, Gummi od. dgl., insbesondere zur nachträglichen Verlegung von Kabeln (6) an Wänden, Böden oder Möbeln, dadurch gekennzeichnet, daß sie zwei in Längsrichtung miteinander verbundene Schenkel (1, 2; 1", 2"; 1 ''', 2 ''') aufweist, die senkrecht zueinander angeordnet oder in eine zueinander senkrechte Lage bringbar sind, und daß mindestens eine, den durch die Schenkel (1, 2; 1", 2"; 1 ''', 2 ''') in ihrer zueinander senkrechten Lage aufgespannten Hohlraum (5, 5", 5 ''') abschließende Abdeckung (3, 4; 3, 4'; 3", 4"; 3 ''', 4 ''') elastisch zurückklappbar mit einem Schenkel (2; 2"; 2 ''') verbunden ist.

2. Kabelschutzeinrichtung nach Patentanspruch 1, dadurch gekennzeichnet, daß sie einstückig ausgebildet ist.

3. Kabelschutzeinrichtung nach Patentanspruch 1 und 2, dadurch gekennzeichnet, daß die Schenkel (1", 2"; 1 ''', 2 ''') gelenkig miteinander verbunden sind.

4. Kabelschutzeinrichtung nach Patentanspruch 1, dadurch gekennzeichnet, daß die mit dem einen Schenkel (2", 2''') verbundene Abdeckung (3", 3 ''') in eine dem anderen Schenkel 1"; 1 ''') zugeordnete Einrast-Ausnehmung (15; 15 ''') einrastbar ist.

5. Kabelschutzeinrichtung nach Patentanspruch 4, dadurch gekennzeichnet, daß die Sehne der Abdeckung (3"; 3 ''') in nicht eingerastetem Zustand länger ist als der Abstand zwischen der Verbindung der Abdeckung (3"; 3 ''') mit dem einen Schenkel (2"; 2 ''') und der Einrast-Ausnehmung
(15; 15 ''') bei zueinander senkrechter Lage der
Schenkel (1", 2"; 1 ''', 2 ''').

6. Kabelschutzeinrichtung nach Patentanspruch 1, dadurch
gekennzeichnet, daß die Abdeckung (3, 4; 3, 4'; 3", 4";
3 ''', 4 ''') gekrümmt ist.

7. Kabelschutzeinrichtung nach den Patentansprüchen 1,
4, 6, wobei die Abdeckung (3 ''') konkav gekrümmt ist,
dadurch gekennzeichnet, daß die Einrast-Ausnehmung (15 ''')
in einem von dem anderen Schenkel (1 ''') vorspringenden
Steg (21) ausgebildet ist.

8. Kabelschutzeinrichtung nach den Patentansprüchen
1 und 4, dadurch gekennzeichnet, daß die Abdeckung (3")
in ihrem Einrast-Bereich (16) mit einem widerhakenförmigen
Vorsprung (18) versehen ist, der in eine dem Vorsprung (18)
im Querschnitt angepaßte, der Einrast-Ausnehmung (15)
zugeordnete Nut (17) unter Verspannung der Abdeckung (3")
gegen die Einrast-Ausnehmung (15) einrastbar ist.

9. Kabelschutzeinrichtung nach Patentanspruch 1, dadurch
gekennzeichnet, daß im Bereich der Außenkante eines
jeden Schenkels (1, 2; 1', 2'; 1", 2") je eine Abdeckung
(3, 4; 3, 4'; 3", 4") vorgesehen ist, wobei die so gebildeten Abdeckungen (3, 4; 3, 4'; 3", 4") bei zueinander
senkrechter Lage der Schenkel sich wenigstens teilweise
überlappen.

10. Kabelschutzeinrichtung nach Patentanspruch 1, dadurch
gekennzeichnet, daß wenigstens eine Außenfläche der
Schenkel (1, 2; 1", 2"; 1 ''', 2 ''') mit einer selbstklebenden Beschichtung (7, 8) versehen ist, die mit einer
Abziehfolie (9, 10) versehen ist.

FIG.1

FIG.2

FIG.3

FIG.4

FIG.5